# EUROPEAN PATENT APPLICATION

(11) **EP 2 076 043 A1**
(43) Date of publication of application: **01.07.2009**
(21) Application number: 08007851.2
(22) Date of filing: 23.04.2008
(51) Int. Cl.: H04N 7/24, H04N 5/00

(54) **Commercial processing apparatus**

(30) Priority: 18.12.2007 JP 2007325895
(71) Applicant: MITSUBISHI ELECTRIC CORPORATION, Chiyoda-ku Tokyo 100-8310 (JP)
(72) Inventor: Hanada, Takehiko, Tokyo 100-8310 (JP); Sakaguchi, Hiroki, Tokyo 100-8310 (JP); Imai, Shigeru, Tokyo 100-8310 (JP); Nakata, Haruo, Tokyo 100-8310 (JP); Miura, Shin, Tokyo 100-8310 (JP); Matsubara, Masami, Tokyo 100-8310 (JP); Akatsu, Shinji, Tokyo 100-8310 (JP)
(74) Representative: Pfenning, Meinig & Partner GbR

(57) **Abstract**

A commercial processing apparatus which can improve an commercial effect and can arbitrarily select a means used for the improvement is provided. The commercial processing apparatus acquires an AV stream by using a tuner (2), a streaming processing unit (3), or a DVD drive (4). A demultiplexer (5) demultiplexes the AV stream to acquire commercial metadata. A web browser (7) acquires a script document in which a procedure for processing the commercial metadata is described. A JavaScript VM (6) interprets the script document acquired by the web browser (7), and performs a process on the commercial metadata demultiplexed and acquired by the demultiplexer (5) according to the description of the script document.

## Description

### BACKGROUND OF THE INVENTION

### Field of the Invention

The present invention relates to a commercial processing apparatus which performs an arbitrary process on commercial metadata.

### Description of Related Art

Commercials inserted into intervals of a broadcast program are aimed at the promotion of sales of goods which are a target for advertisement, and improvements in the corporate image. However, because commercials exert advertising effectiveness only during which they are being broadcast and viewers are watching to them, if they are commercials for advertisement of products, they need to make viewers remember for purchase and to make them go to selling areas of the products. As for improvements in the corporate image, conventional commercials have not gone beyond informing only a limited description.

In order to solve this problem, there have been provided, for example, a method of video-recording and recording commercials and information about the commercials, and making viewers browse the commercials as if they saw a catalog, and a method of providing both a means for accessing to detailed information via a network and a means for purchasing or consuming a product (for example, refer to patent reference 1) . [Patent reference 1] JP,2002-218377,A

However, the above-mentioned conventional apparatus cannot process commercials by using any method other than the processing implemented in the apparatus. For example, even if a viewer wants to list products which match up with an arbitrary keyword from a commercial whatever its commercial sponsor, the above-mentioned conventional apparatus cannot perform this process unless it has a function corresponding to the process. Furthermore, although it is theoretically possible to change and update the processing method, actually, any person other than those who developed the apparatus cannot be allowed to perform the changing and updating from the viewpoint of a trade secret and a contractual problem. Actually, there exists no maker which discloses information and a development tool required for a third party to develop software used for a digital broadcasting receiver. Therefore, it can be said that there is a limit to a means for enabling a third party to introduce a function of improving the effectiveness of commercials into a digital broadcasting receiver.

On the other hand, although digital broadcasting which has become widespread in recent years includes data broadcasting, in the data broadcasting, data and a script which processes the data are multiplexed into a broadcasting stream and are broadcast. A commercial may be included in this data. Therefore, because a person other than those who developed a digital broadcasting receiver can describe arbitrary data about a commercial and an arbitrary script, although the description is subject to some constraints, there is no limit to this method, unlike the method shown by patent reference 1. However, because the data and the script are combined and the combination is provided via data broadcasting, any data containing a commercial cannot be processed by using an arbitrary script which is created by a third party other than those who created the commercial and those who developed a digital broadcasting receiver.

### SUMMARY OF THE INVENTION

The present invention is made in order to solve the above-mentioned problems, and it is therefore an object of the present invention to provide a commercial processing apparatus which can improve the effectiveness of commercials and which can arbitrarily select a means for improving the effectiveness of commercials.

In accordance with the present invention, there is provided a commercial processing apparatus including: a commercial metadata demultiplexing unit for demultiplexing an AV stream into which video data, audio information, and commercial metadata are multiplexed into the commercial metadata to acquire the commercial metadata; a script document acquisition unit for acquiring a script document in which a procedure for processing the commercial metadata is described; and a document interpretation execution unit for interpreting the script document, and for performing a process on the commercial metadata according to a description of the script document.

Because the commercial processing apparatus according to the present invention acquires a script document in which a procedure for processing the commercial metadata is described, and performs a process on the commercial metadata according to the description of the script document which it acquires by interpreting the script document, as previously mentioned, the commercial processing apparatus can improve the effect of commercials, and can arbitrarily select a means for improving the effect of commercials.

Further objects and advantages of the present invention will be apparent from the following description of the preferred embodiments of the invention as illustrated in the accompanying drawings.

### BRIEF DESCRIPTION OF THE DRAWINGS

Fig. 1 is a block diagram showing a commercial processing apparatus in accordance with Embodiment 1 of the present invention;
Fig. 2 is an explanatory drawing showing the format of commercial metadata for use in the commercial processing apparatus in accordance with Embodiment 1 of the present invention;
Fig. 3 is an explanatory drawing showing embedding of a link to a script document in a web page in the commercial processing apparatus in accordance with Embodiment 1 of the present invention;
Fig. 4 is an explanatory drawing showing the format of the script document for use in the commercial processing apparatus in accordance with Embodiment 1 of the present invention; and
Fig. 5 is an explanatory drawing showing a procedure of the commercial processing apparatus in accordance with Embodiment 1 of the present invention.

### DETAILED DESCRIPTION OF THE PREFERRED EMBODIMENTS

### Embodiment 1.

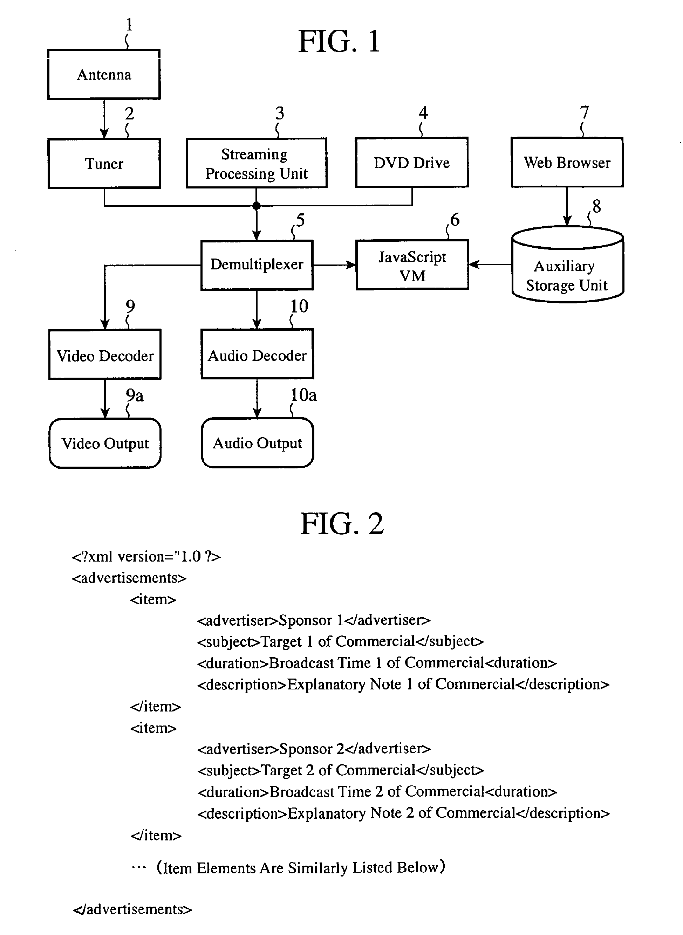

Fig. 1 is a block diagram showing a commercial processing apparatus in accordance with Embodiment 1 of the present invention. In the figure, the commercial processing apparatus is provided with an antenna 1, a tuner 2, a streaming processing unit 3, a DVD drive 4, a demultiplexer 5, a JavaScript (registered trademark) VM 6, a web browser 7, an auxiliary storage unit 8, a video decoder 9, and an audio decoder 10. This commercial processing apparatus is implemented on a digital broadcasting receiver.

The antenna 1 is a receiving antenna for receiving a broadcast wave which is broadcast via BS/CS/digital terrestrial broadcasting. The tuner 2 is a unit for acquiring an MPEG-2 stream from the broadcast wave which is received by the antenna 1. The streaming processing unit 3 is the one which has an Internet access function, such as a TCP/IP protocol stack, of accessing the Internet via a network, such as an Ethernet (registered trademark) LAN, or a radio LAN. More specifically, this streaming processing unit 3 has a function of receiving packets transferred via the network using IP (Internet Protocol), UDP (user datagram protocol), and RTP (real-time transport protocol), as in the case of an IP broadcast, and of combining the payloads of a series of the packets received so as to acquire an MPEG-2 stream. The DVD drive 4 is a unit for acquiring an MPEG-2 stream from a DVD video disk.

In accordance with the present invention, the format of an AV (audiovisual) stream into which video data, audio data, and commercial metadata are multiplexed is not limited to MPEG-2, and an AV stream can have any type of format as long as it is the one into which video data and audio data about a program, and commercial metadata which are metadata about a commercial are multiplexed. In the case of MPEG-2, video data, audio data, and commercial metadata can be multiplexed into an MPEG-2 stream by storing commercial metadata in the payload (PES_packet_data_byte in PES_packet in ISO/IEC 13818-1) of a PES packet (PES_packet in ISO/IEC 13818-1). More concretely, in a case in which the MPEG-2 stream is an MPEG-2 TS stream, by dividing a PES packet in which commercial metadata are stored into fragments and storing them in the payloads (the data_bytes of transport_packets according to ISO/IEC 13818-1) of TS packets (the transport_packets according to ISO/IEC 13818-1), and then adding video data, audio data, and PID (PID; PacketID accoding to ISO/IEC 13818-1), which is different from other streams, to the TS packets, the multiplexing can be implemented.

The antenna 1 and the tuner 2 construct a broadcast receiving unit for receiving a broadcast wave, and for selecting an arbitrary broadcast program from the broadcast wave so as to acquire an AV stream. The streaming processing unit 3 constructs a communication broadcast receiving unit for selecting a broadcast program via communications so as to acquire an AV stream. The DVD drive 4 constructs a recording medium reading unit for acquiring an AV stream from an image recording medium.

The demultiplexer 5 is a commercial metadata demultiplexing unit for demultiplexing an MPEG-2 stream which is an AV stream acquired by the antenna 1 and the tuner 2, the streaming processing unit 3, or the DVD drive 4 so as to acquire commercial metadata from the MPEG-2 stream. In a case in which the MPEG-2 stream has the MPEG-2 TS format, a sequence of TS packets which construct the MPEG-2 stream can be divided into a sequence of TS packets about video data, a sequence of TS packets about audio data, and a sequence of TS packets about commercial metadata according to the difference in the PID (PID=PacketID according to ISO/IEC 13818-1) described in each TS packet itself, i.e., the difference in the packet identifier. In contrast, in a case in which the MPEG-2 stream has the MPEG-2 PS format, by dividing a sequence of PES packets which construct the MPEG-2 stream into a sequence of PES packets about video data, a sequence of PES packets about audio data, and a sequence of PES packets about commercial metadata according to the difference in the stream_id described in each PES packet itself, i.e., the difference in the stream identifier, the commercial metadata can be demultiplexed from the MPEG-2 stream.

The video data demultiplexed from the AV stream are decoded to a sequence of image data by the video decoder 9, and are outputted as a video output 9a. The audio data demultiplexed from the AV stream are decoded to PCM data by the audio decoder 10, and are outputted as an audio output 10a. Furthermore, the demultiplexed commercial metadata are processed by the JavaScript (registered trademark) VM 6 (the details of this process will be mentioned later).

The commercial metadata are the data in which attribution information about the attributions of the commercial is described, and describes the following plural pieces of information in an XML form as shown in Fig. 2.
■ Commercial Sponsor
■ Target of commercial
■ Broadcast time for commercial
■ Explanatory note of commercial

The web browser 7 is a functional unit which accesses to a URI inputted by the user of the commercial processing apparatus, downloads a script document according to HTTP (Hyper-Text Transfer Protocol), and stores the script document in the auxiliary storage unit 8. As an alternative, the web browser is constructed in such a way as to access to a URI inputted by the user, download a web page, detect metadata in which a URI indicating the location of a script document embedded into the web page is described, download the script document according to HTTP, and store the script document in the auxiliary storage unit 8. This web browser 7 constructs a script document acquisition unit which downloads a script document from the location of the script document which is indicated by metadata embedded into a document in a web page currently being perused by the user to acquire the script document.

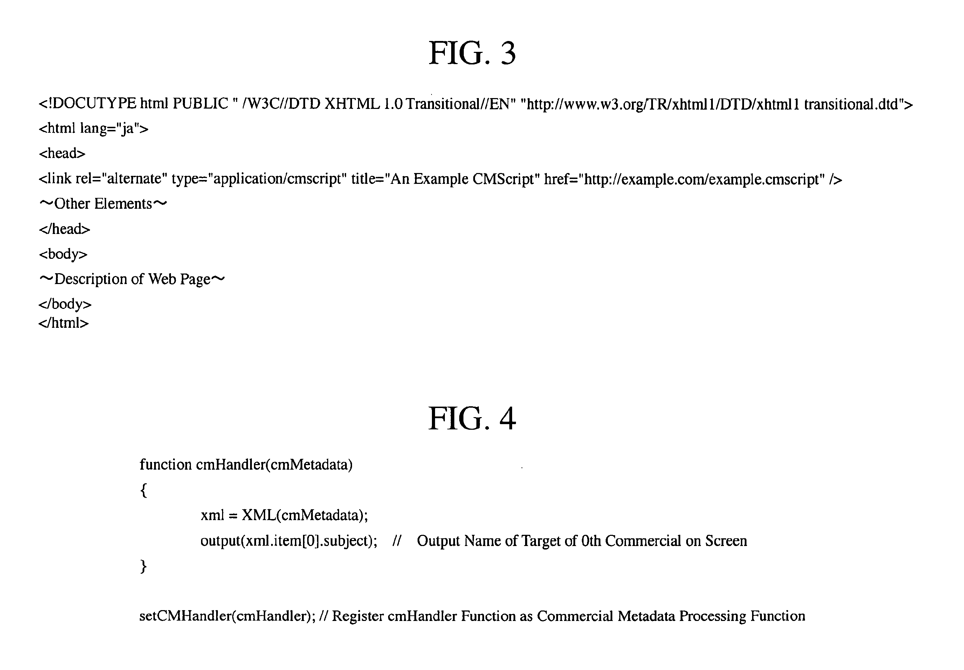

The metadata embedded into a web page described in XHTML, in which a URI indicating the location of a script document is described, are shown by a link element as shown in Fig. 3 having, as its attributes, type="application/cmscript" which shows that it is a script document, and href="http://example.com/example.cmscript" which shows the URI of the script document. The document which the web browser 7 downloads is a web page described in XHTML if the value of the Content-Type header of HTTP at the time of downloading is application/xhtml+xml, or a script document if it is application/cmscript.

The JavaScript (registered trademark) VM 6 constructs a document interpretation execution unit which interprets the script document stored in the auxiliary storage unit 8, and which processes the commercial metadata which are acquired by the demultiplexer 5 according to the description of the script document. This JavaScript (registered trademark) VM 6 is the VM (virtual machine) of JavaScript (registered trademark) which is a script language.

The JavaScript (registered trademark) VM 6 reads the script document as shown in Fig. 4 which is described in the JavaScript (registered trademark) language from the auxiliary storage unit 8 and interprets this script document so as to register a function cmHandler as a commercial metadata processing function. After the demultiplexer 5 demultiplexes the AV stream to acquire the commercial metadata, the JavaScript (registered trademark) VM 6 carries out the commercial metadata processing function registered therein by using the commercial metadata as an argument of a character string. At this time, cmMetadata which are the argument of the function cmHandler shown in Fig. 4 become the commercial metadata. A function XML is the one which is provided as standard in the JavaScript (registered trademark) language, and returns a syntax-analyzed XML object. Because a notation like xml.item[0].subject refers to the contents of a subject element under the 0th item element under the root element of an XML document, in a case in which, for example, the argument cmMetadata are the commercial metadata shown in Fig. 2, if a function output is the one of outputting to the screen, a description like output (xml.item[0].subject) can output a character string "target 1 of commercial" (refer to Fig. 2) to the screen.

Because the specifications of the JavaScript (registered trademark) language is disclosed by, for example, Standard ECMA-262 ECMAScript Language Specification 3rd edition (December 1999), and notations about XML, such as xml.item[0].subject, are disclosed by, for example, Standard ECMA-357 ECMAScript for XML (E4X) Specification (June 2004), and they are thus known, the detailed explanation of them will be omitted.

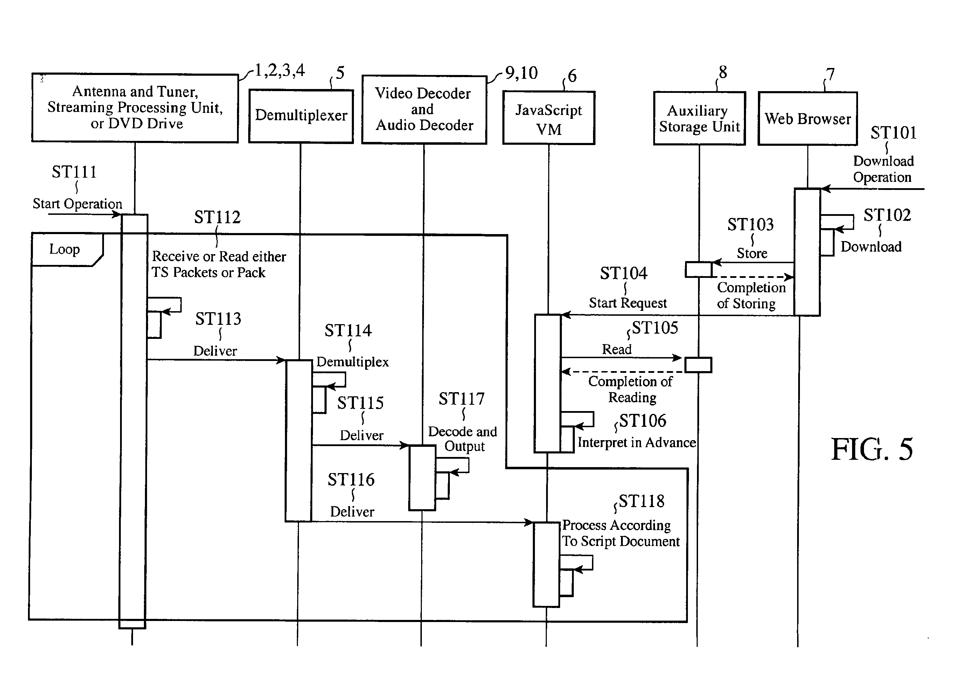

Next, the operation of the commercial processing apparatus in accordance with Embodiment 1 will be explained. Fig. 5 is a flow chart showing the operation of the commercial processing apparatus. First, a procedure for downloading a script document in a preparation stage will be explained. The user of the commercial processing apparatus operates the web browser 7 in step ST101 so as to download a script document in step ST102, and stores the script document in the auxiliary storage unit 8 in step ST103. Next, in response to a request for start of the script document which is, in step ST104, made of the JavaScript (registered trademark) VM 6, the JavaScript (registered trademark) VM 6 reads the script document from the auxiliary storage unit 8 in step ST105, executes the script document in step ST106, and registers the commercial metadata processing function.

Next, a procedure for processing a commercial will be explained. The user of the commercial processing apparatus, in step ST111, performs, as a starting operation, an operation of instructing to tune in a program on the antenna 1 and the tuner 2, an operation of instructing to start reception on the streaming processing unit 3, or an operation of instructing to read DVD video contents on the DVD drive 4. After that, the commercial processing apparatus carries out a processing procedure surrounded by a loop frame in the figure every time when the antenna 1 and the tuner 2, the streaming processing unit 3, or the DVD drive 4 acquires either TS packets in the MPEG-2 TS format or a pack in the MPEG-2 PS format.

When the antenna 1 and the tuner 2, the streaming processing unit 3, or the DVD drive 4 acquires either TS packets or a pack in step ST112, it, in step ST113, delivers either the TS packets or the pack to the demultiplexer 5. The demultiplexer 5 then, in step ST114, demultiplexes either the TS packets or the pack into video data, audio data, and commercial metadata, and, in step ST115, delivers the video data and the audio data to the video decoder 9 and the audio decoder 10, respectively. The demultiplexer also, in step ST116, delivers the commercial metadata to the JavaScript (registered trademark) VM 6.

The video decoder 9 and the audio decoder 10 to which the video data and the audio data are delivered, in step ST117, decodes the streams and output the decoded streams as a video output 9a and an audio output 10a, respectively. On the other hand, the JavaScript (registered trademark) VM 6 to which the commercial metadata are delivered, in step ST118, processes the commercial metadata by executing the commercial metadata processing function which is, in step ST106, registered therein in advance.

By thus making it possible to process the commercial metadata in an MPEG-2 stream according to an arbitrary script document downloaded from the Internet by the web browser 7, the commercial processing apparatus can carry out commercial processing aimed at improving the effect of the commercial using the arbitrary script which is created by a third party other than the producer of the commercial and the developer of the digital broadcasting receiver.

As mentioned above, because the commercial processing apparatus in accordance with Embodiment 1 is provided with the commercial metadata demultiplexing unit for demultiplexes an AV stream into which video data, audio information, and commercial metadata are multiplexed into the commercial metadata to acquire the commercial metadata, the script document acquisition unit for acquiring a script document in which a procedure for processing the commercial metadata is described, and the document interpretation execution unit for interpreting the script document, and for performing a process on the commercial metadata according to the description of the script document, the commercial processing apparatus can improve the effect of the commercial and can select a means for improving the effect of the commercial arbitrarily.

Furthermore, because in the commercial processing apparatus in accordance with Embodiment 1, the script document acquisition unit acquires the script document through a network via communications, the commercial processing apparatus can acquire an arbitrary script document via the network.

In addition, because in the commercial processing apparatus in accordance with Embodiment 1, the script document acquisition unit acquires the script document by using a web browser and downloading the script document from the location of the script document which is shown by metadata embedded into a document of a web page being perused by the user, the script document acquisition unit can acquire a script document by using the simple means without having to use a special method of acquiring the script document.

Furthermore, because the commercial processing apparatus in accordance with Embodiment 1 includes the broadcast receiving unit for receiving a broadcast wave and then selecting an arbitrary broadcast program so as to acquire an AV stream, the commercial processing apparatus can easily acquire an AV stream from a broadcast program which is provided by a broadcast wave.

In addition, because the commercial processing apparatus in accordance with Embodiment 1 includes the communication broadcast receiving unit for selecting a broadcast program via communications so as to acquire an AV stream, the commercial processing apparatus can easily acquire an AV stream from a broadcast program which is provided via communications, e.g., streaming.

Furthermore, because the commercial processing apparatus in accordance with Embodiment 1 includes the recording medium reading unit for acquiring an AV stream from an image recording medium, the commercial processing apparatus can easily acquire an AV stream from the image recording medium, such as a DVD video disk.

Many widely different embodiments of the present invention may be constructed without departing from the spirit and scope of the present invention. It should be understood that the present invention is not limited to the specific embodiments described in the specification, except as defined in the appended claims.

## Claims

1. A commercial processing apparatus **characterized in that** said apparatus comprises:
a commercial metadata demultiplexing unit (5) for demultiplexing an AV stream into which video data, audio information, and commercial metadata are multiplexed into said commercial metadata to acquire said commercial metadata;
a script document acquisition unit (7) for acquiring a script document in which a procedure for processing said commercial metadata is described; and
a document interpretation execution unit (6) for interpreting said script document, and for performing a process on the commercial metadata according to a description of said script document.

2. The commercial processing apparatus according to claim 1, **characterized in that** the script document acquisition unit acquires the script document through a network via communications.

3. The commercial processing apparatus according to claim 2, **characterized in that** the script document acquisition unit acquires the script document by using a web browser and downloading said script document from a location of said script document which is shown by metadata embedded into a document of a web page being perused.

4. The commercial processing apparatus according to any one of claims 1 to 3, **characterized in that** said apparatus includes a broadcast receiving unit (1 and 1) for receiving a broadcast wave and then selecting an arbitrary broadcast program so as to acquire the AV stream.

5. The commercial processing apparatus according to any one of claims 1 to 3, **characterized in that** said apparatus includes a communication broadcast receiving unit (3) for selecting a broadcast program via communications so as to acquire the AV stream.

6. The commercial processing apparatus according to any one of claims 1 to 3, **characterized in that** said apparatus includes a recording medium reading unit (4) for acquiring the AV stream from an image recording medium.
